# EUROPEAN PATENT SPECIFICATION

(11) **EP 1 447 895 B1**
(45) Date of publication and mention of the grant of the patent: **26.04.2006**
(21) Application number: 04002743.5
(22) Date of filing: 07.02.2004
(51) Int. Cl.: H02G 3/12

(54) **Temporary closing element of an embedded box for electric installations**
Temporäre Verschlusseinrichtung für Unterputzdose für elektrische Geräte
Elément de fermeture temporaire d'un boîtier à affleurement pour installations électriques

(30) Priority: 13.02.2003 IT VI20030028
(43) Date of publication of application: 18.08.2004
(73) Proprietor: Fornasa Mariano, 36078 Valdagno (Vicenza) (IT)
(72) Inventor: Fornasa Mariano, 36078 Valdagno (Vicenza) (IT)
(74) Representative: Bettello, Pietro

(56) References cited:
- DE-U- 8 627 314
- US-A- 4 907 711

## Description

The present finding refers to a temporary closing element of an embedded box for electric installations, in accordance with the general part of Claim 1.

It is known that in electric installations, in particular those of civilian type, wall-embedded boxes are normally used; electric cables converge in said boxes and are inserted inside the boxes through holes on the box surface which are made by the installers themselves. To facilitate the installers in the making of these holes, pre-incisions are already present in the box construction such that the user may obtain the desired number and placement of holes, in accordance with his specific needs and without any particular problems. Normally, said boxes are placed in position by electricians immediately after masons have built and plastered the walls, though before painters apply the final paint coats to the walls themselves. After having executed this final operation the electricians set the fitted plate on the openings of said boxes -- the plate is complete with switches, power sockets, and other similar elements -- while at the same time fastening the cables' ends in the box to said equipment.

In order to assure that the plaster or paint does not penetrate inside the box itself during the application of the plaster and paint coats on the walls, thus causing the introduction of dirt inside the box and consequent possible problems also from the electrical standpoint, the box is closed either with crumpled balls of paper or, more rationally, with a temporary closing element, presently made of plastic material. It must be noted that the boxes of interest here have rectangular openings as well as, corresponding to both side walls of said opening, a bracket provided with a hole adapted to hold the screw used for fastening the external plate to the box. In practice, taking into account the presence of these brackets, the presently-used closing elements are set with their inner surfaces up against the brackets themselves, their external edge being placed above the external edge of the box opening. Once the masons have finished applying the plaster, as well as after the painters have finished applying the paint to the walls, the temporary closing element is eliminated: in order to facilitate the taking of the temporary closing element, the installer may grasp the temporary closing element's fitted projections, such that the box may be reopened. Unfortunately, due to the fact that the edges of said temporary closing element overlap with the corresponding edges of the box opening, when the closing element is separated from the box the plaster or the paint corresponding to said edges is almost always ruined. It is clear that, as a matter of principle, it would not be difficult to touch up these ruined areas, which are of limited extension; however it must be remembered that the contractor encounters many difficulties in rehiring craftsmen for touch-up operations, since the work is considered "annoying" and not economically-satisfying by those who should execute it. On the practical side a proprietor is very often given an apartment with the abovementioned plastering or painting defects still evident; or there is an attempt to remedy the defects by resorting, in some way, to non-specialised personnel; or, finally, for high-end residences, the craftsmen are rehired, with consequent higher costs.

The object of the present finding is to provide a temporary closing element for boxes of the above-described type which is free of the above-described drawbacks and which is, at the same time, easy to use and inexpensive to make.

In US-A-4907711 is described a temporary closing element that has such shape and size that its side edges fit exactly with the internal side edges of the box opening; it is also provided, in correspondence with at least one of the closing element edges, a folded extension located inside the box, which is arranged astride the bracket present on the corresponding box side. Lastly it is foreseen that the closing element be made from a sufficiently stiff material, though easily foldable or breakable following a firm push exerted thereon directed from the outside toward the inside of the box, which allows the removal of the closing element, naturally when its removal is necessary, without damaging in the least the paint and/or plaster surrounding the opening of the box itself, since the side edges of the closing element remain completely inside the corresponding edges of the box opening.

The object of the present finding is to provide a better embodiment form of the device described in the cited document in order to obtain a more useful termporary closing element. This is obtained by means of the device according to the characterising part of the claim 1. Another particular embodiment form of the device according to the invention is described in the claim 6.

The characteristics of the finding will be detailed below, with reference to particular embodiments thereof, given as non-limiting examples with the aid of the attached tables of drawings, wherein:
1. fig. 1 (Tab. I) illustrates an axonometric view of a first particular embodiment of the device mentioned in the finding, which is placed in proximity of a box for electric installations;
2. figs. 2 and 3 represent two axonometric views of the abovementioned;
3. figs. 4 and 5 (Tab. II) represent two axonometric views of a box for electric installations, closed by the closing element mentioned in the finding and in the opening phase, respectively;
4. figs. 6 and 7 (Tab. III) represent two views, in planar and use position, respectively, of an alternative form of the device mentioned in the finding;
5. fig. 8 represents a view in conditions of actual use of a further embodiment of the device mentioned in the finding.

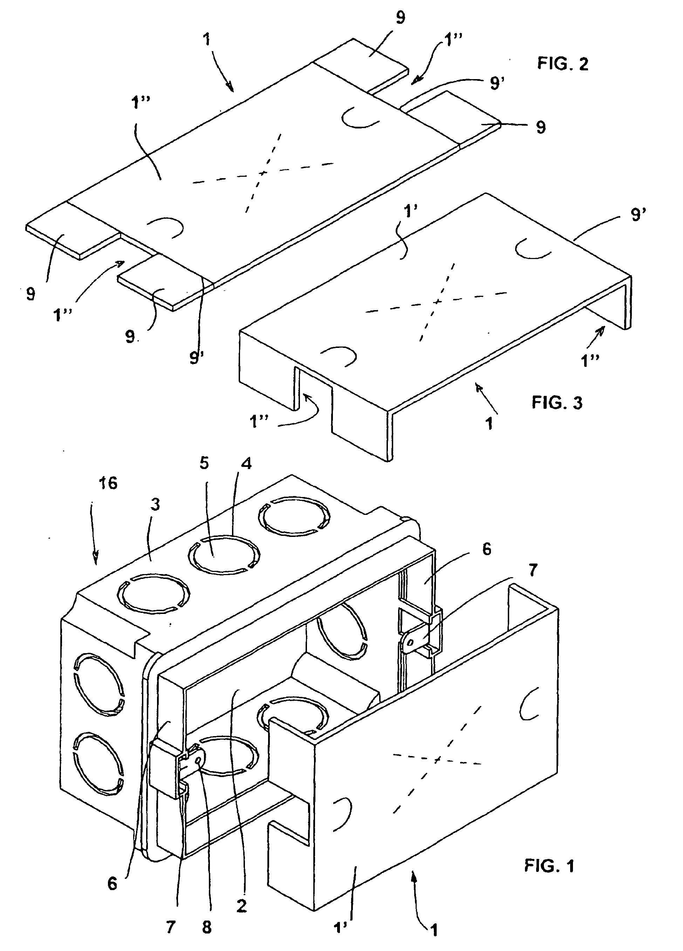

In fig. 1 the temporary closing element 1 mentioned in the finding is adapted to close an embedded box 16 of known type, provided with front opening 2 of rectangular shape on which, installation completed, a plate is placed in which power sockets, switches, buttons and other similar items are housed. Side walls 3 of the box have the pre-incisions 4, such that the operator may easily eliminate the areas 5 delimited by said pre-incisions, to allow an easy insertion of the electric cables inside the box. Corresponding with each of the side walls 6 of the box opening there is a bracket 7, bearing a hole 8 for the insertion of a screw which allows the fastening of the definitive plate mentioned above.

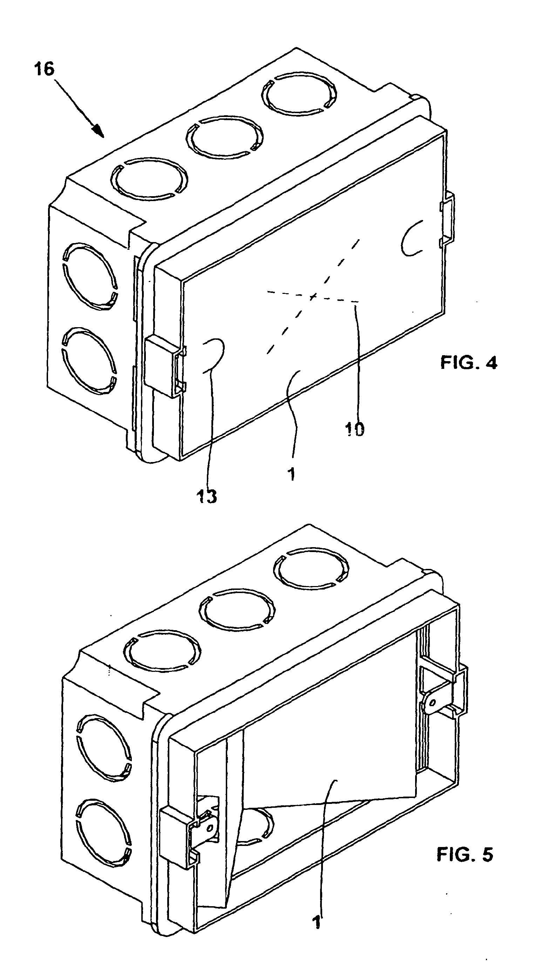

According to the finding, the closing element 1 (see also figs. 2 and 3) has a central part 1', of size corresponding exactly to that of the inner edge of the opening 2 of box 4. Conversely, corresponding with the minor sides of said internal part there are side extensions 1" which, in this embodiment of the finding, assume the form of two additional rectangular elements 9. These extensions are connected to the central part 1' of element 1 by way of a pre-incision 9', through which the user may easily fold back the elements 9 such that these are moved from a position parallel to element 1' to a position substantially perpendicular to the abovementioned element, as is clearly understood by comparing the figures 2 and 3. Once the device mentioned in the finding is arranged in the position illustrated in fig. 3 it is easy to understand how the abovementioned element may be perfectly inserted into the box opening (see fig. 4), the two rectangular elements 9 of each of the side edges of element 1 arranged astride the corresponding bracket 7. In the position illustrated in fig. 4 the box thus appears to be perfectly closed. To this purpose it must also be considered that the front box surface will arrange itself exactly flush with the walls into which it was previously embedded.

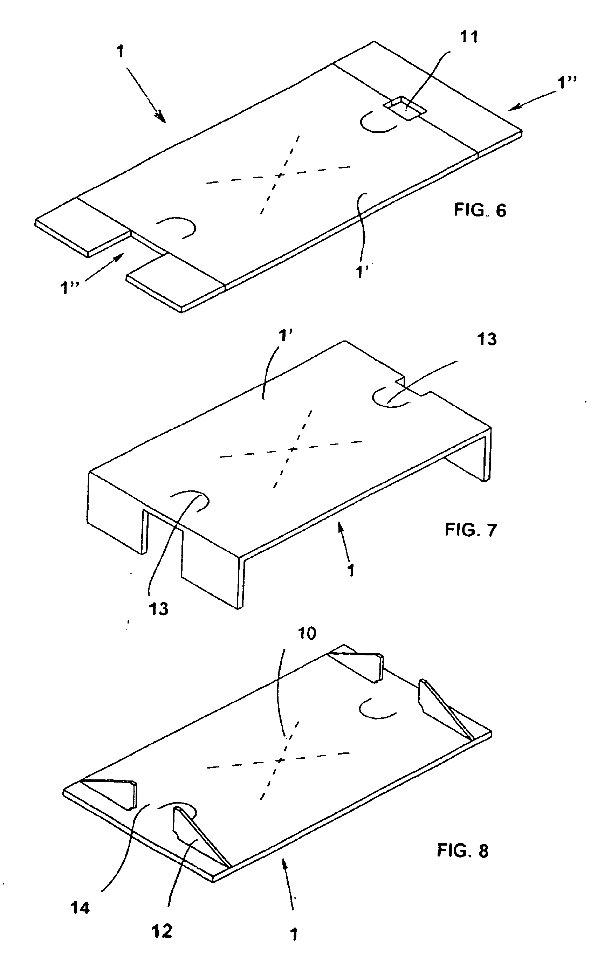

When on the other hand the user wishes to remove the cover element 1 from the box opening it will be sufficient to press the element itself with certain decisive force toward the inside of the box, deforming it as illustrated in fig. 5, or even breaking it. To this purpose it is necessary to note that the cover element will be made with a sufficiently stiff material (cardboard, for example), but also one which allows the folding or breaking of the abovementioned element. To facilitate this operation it is also possible to provide a series of pre-incisions 10 on the cover element, for example corresponding with its central part.

The effectiveness and utility of the removal operation of the cover element is ensured by the fact that, unlike similar embodiments of known type, the cover element remains completely inside the box opening. In this way it is possible to avoid the ruin of the paint or plaster which has been applied around the box and that which inadvertently has also been applied to the surface of the closing element.

In figs. 6-7, as well as fig. 8 two additional embodiments of the device mentioned in the finding are illustrated.

In particular, in the embodiment illustrated in figs. 6 and 7, an aperture 11 is provided, partially cut from both central part 1 and one of its side extensions 1". Conversely, the other side extension 1" is substantially analogous to the already illustrated solution. In practice, through this structural solution a more secure contact is obtained between the cover element 1 and the box to be closed, since one of the brackets 7 is placed inside the abovementioned aperture 11.

Conversely, in the solution illustrated in fig. 8 it is seen that, in proximity to the side edges of cover element 1 and on the surface that will be folded toward the box's interior, there are two pairs of projections 12, variously shaped and suitable for placement astride the brackets 7, being separated by an intermediate space 14.

Finally, it will be noted that in all cover element embodiments it is foreseen the possibility to make the incisions 13, of substantially curved form and arranged in correspondence with the brackets 7, to avoid the possible deformation of the abovementioned brackets during the application or breaking of the cover element 1.

From the above, it is therefore evident that in using the device mentioned in the finding, in all its various embodiments, the user has at his disposal a particularly useful device for protecting the interior part of embedded boxes for electric installations of the type previously described, said element being easily removable after work is completed, without any risk of ruining the paint and/or plaster present around the box itself. All of the above is obtained with an extremely simple and economical device, which conclusively confirms that the set objectives have been achieved.

## Claims

1. TEMPORARY CLOSING ELEMENT OF AN EMBEDDED BOX FOR ELECTRIC INSTALLATIONS, the box being of the type which has, in correspondence with both its side walls (6) a bracket (7) provided with a hole (8) adapted to hold a screw for fastening the definitive closing plate, of rectangular form, to the box, the temporary closing element having a shape and size such that its side edges fit exactly with the internal side edges of the box, an extension (1") being provided to be put inside the box and placed astride the corresponding bracket (7), in correspondence with at least one of the side edges of the box, the closing element being made of a sufficiently stiff material, though easily foldable or breakable following a firm push exerted thereon directed from the outside toward the inside of the box
**characterised in that**
the temporary closing element is suitable for assuming a planar position in which the extension (1") is in the plane of the central part (1') and a use position in which the extension (1") is folded toward the interior of the box itself, in a substantially perpendicular manner to the central part (1') of the cover element.

2. ELEMENT, according to Claim 1, **characterised in that** it has a central part (1'), with a extension (1"), in correspondence with one of its side edges, foldable toward the interior of the box to a position substantially perpendicular to said internal part, said extension being of substantially rectangular shape, an aperture (11) being cut between the edge of the internal part (1') and the extension (1") in correspondence with the area where, after assembly has been completed, there will be one of the brackets (7) of the box, the bracket fitting into said aperture (11).

3. ELEMENT, according to Claim 1, **characterised in that** the cover element (1) has, in correspondence with at least one of its side edges, a pair of projections (12), perpendicular to the element itself and which rise in correspondence with the surface which will be facing the interior of the box, said projections being separated by an intermediate space (14), in which one of the brackets of the box will be placed.

4. ELEMENT, according to Claim 1, **characterised in that** it has pre-incisions (10) on its surface, adapted to favour its deformation when the user presses the element itself toward the inside of the box.

5. ELEMENT, according to Claim 1, **characterised in that** it has the incisions (13) of substantially curved form, placed in correspondence with the brackets (7).

6. TEMPORARY CLOSING ELEMENT OF AN EMBEDDED BOX FOR ELECTRIC INSTALLATIONS, the box being of the type which has, in correspondence with both its side walls (6) a bracket (7) provided with a hole (8) adapted to hold a screw for fastening the definitive closing plate, of rectangular form, to the box, the temporary closing element having a shape and size such that its side edges fit exactly with the internal side edges of the box, an extension (1'') being provided to be put inside the box and placed astride the corresponding bracket (7), in correspondence with at least one of the side edges of the box,
**characterised in that**
the closing element is made of a cardboard material that is sufficiently stiff, though easily foldable or breakable following a firm push exerted thereon directed from the outside toward the inside of the box.

## Patentansprüche

1. Temporäres Verschlusselement einer Unterputzdose für elektrische Geräte, welches an seinen beiden Seitenwänden (6) einen Befestigungsbügel (7) mit einem Loch (8) zur Aufnahme einer Schraube zur Befestigung der endgültigen rechteckigen Verschlussplatte an der Dose aufweist, wobei das temporäre Verschlusselement in Form und Größe derart bemessen ist, dass seine Seitenkanten genau den inneren Seitenkanten der Dose angepasst sind, wobei ein Verlängerungselement (1") zum Einsetzen in die Dose vorgesehen ist, welches rittlings auf dem entsprechenden Befestigungsbügel (7) aufsitzt, in Übereinstimmung mit wenigstens einer der Seitenkanten der Dose, wobei das Verschlusselement aus einem ausreichend steifen Material hergestellt ist, das jedoch leicht faltbar oder zerbrechlich ist, wenn auf die Dose ein fester Stoß von außen nach innen ausgeübt wird, **dadurch gekennzeichnet, dass** das temporäre Verschlusselement eine ebene Position einnehmen kann, bei der sich das Verlängerungselement (1") in der Ebene des mittleren Teils (1') befindet, und eine Gebrauchsposition, bei der das Verlängerungselement (1 ") im wesentlichen senkrecht zum mittleren Teil (1') des Abdeckelements zum Doseninnenraum eingeknickt ist.

2. Element nach Anspruch 1, **dadurch gekennzeichnet, dass** es einen mittleren Teil (1') mit einem Verlängerungselement (1") an einer seiner Seitenkanten besitzt, welches zum Inneren der Dose hin in eine im wesentlichen senkrecht zum inneren Teil befindliche Position einknickbar ist, wobei das Verlängerungselement im wesentlichen rechteckige Form besitzt und zwischen dem Rand des inneren Teils (1') und dem Verlängerungselement (1") eine Öffnung (11) eingeschnitten ist in dem Bereich, wo nach erfolgtem Einbau einer der Befestigungsbügel (7) der Dose in die Öffnung (11) hineinpasst.

3. Element nach Anspruch 1, **dadurch gekennzeichnet, dass** das Abdeckelement (1) an wenigstens einer seiner Seitenkanten ein Paar Vorsprünge (12) besitzt, welche senkrecht zu dem Element angeordnet sind, und welche in Übereinstimmung mit der zum Inneren der Dose hin gerichteten Oberfläche ansteigen, wobei die Vorsprünge durch einen Zwischenraum (14) getrennt sind, in den einer der Befestigungsbügel der Dose eingesetzt wird.

4. Element nach Anspruch 1, **dadurch gekennzeichnet, dass** es an seiner Oberfläche Voreinschnitte (10) besitzt, die seine Deformierung begünstigen, wenn der Benutzer das Element zum Inneren der Dose hin eindrückt.

5. Element nach Anspruch 1, **dadurch gekennzeichnet, dass** es Einschnitte (13) von im wesentlichen gebogener Form besitzt, die entsprechend den Befestigungsbügeln (7) platziert sind.

6. Temporäres Verschlusselement einer Unterputzdose für elektrische Geräte, welches an seinen beiden Seitenwänden (6) einen Befestigungsbügel (7) mit einem Loch (8) zur Aufnahme einer Schraube zur Befestigung der endgültigen rechteckigen Verschlussplatte an der Dose aufweist, wobei das temporäre Verschlusselement in Form und Größe derart bemessen ist, dass seine Seitenkanten genau den inneren Seitenkanten der Dose angepasst sind, wobei ein Verlängerungselement (1 ") zum Einsetzen in die Dose vorgesehen ist, welches rittlings auf dem entsprechenden Befestigungsbügel (7) aufsitzt in Übereinstimmung mit wenigstens einer der Seitenkanten der Dose, **dadurch gekennzeichnet, dass** das Verschlusselement aus ausreichend steifem Pappmaterial besteht, das jedoch leicht faltbar oder zerbrechlich ist, sobald ein fester Stoß von außen nach innen auf die Dose ausgeübt wird.

## Revendications

1. Elément de fermeture temporaire d'une boîte encastrée pour des installations électriques, la boîte étant du type qui a, en correspondance avec deux de ses parois latérales (6), un étrier (7) muni d'un trou (8) adapté pour contenir une vis pour fixation de la plaque de fermeture définitive de forme rectangulaire sur la boîte, l'élément de fermeture temporaire ayant une forme et une dimension telles que ses bords latéraux s'agencent exactement dans les bords latéraux internes de la boîte, un prolongement (1") étant agencé pour être mis en place à l'intérieur de la boîte et placé en chevauchement sur l'étrier correspondant (7), en correspondance avec au moins un des bords latéraux de la boîte, l'élément de fermeture étant réalisé en un matériau suffisamment rigide, bien que facilement pliable ou cassable à la suite d'une poussée ferme exercée sur celui-ci dirigée à partir de l'extérieur vers l'intérieur de la boîte,
**caractérisé en ce que**
l'élément de fermeture temporaire est adapté pour prendre une position plane dans laquelle le prolongement (1") est dans le plan de la partie centrale (1'), et une position d'utilisation dans laquelle le prolongement (1") est plié vers l'intérieur de la boîte elle-même, d'une manière sensiblement perpendiculaire à la partie centrale (1') de l'élément de fermeture.

2. Elément selon la revendication 1, **caractérisé en ce qu'**il a une partie centrale (1'), avec un prolongement (1"), en correspondance avec un de ses bords latéraux, pliable vers l'intérieur de la boîte vers une position sensiblement perpendiculaire à ladite partie interne, ledit prolongement étant d'une forme sensiblement rectangulaire, une ouverture (11) étant découpée entre le bord de la partie interne (1') et le prolongement (1") en correspondance avec la zone où, après que l'assemblage ait été terminé, il va y avoir un des étriers (7) de la boîte, l'étrier s'agençant dans ladite ouverture (11).

3. Elément selon la revendication 1, **caractérisé en ce que** l'élément de fermeture (1) a, en correspondance avec au moins un de ses bords latéraux, une paire de saillies (12), perpendiculaires à l'élément lui-même et qui montent en correspondance avec la surface qui va être en vis-à-vis de l'intérieur de la boîte, lesdites saillies étant séparées par un espace intermédiaire (14), dans lequel un des étriers de la boîte va être placé.

4. Elément selon la revendication 1, **caractérisé en ce qu'**il a des pré-incisions (10) sur sa surface, adaptées pour favoriser sa déformation lorsque l'utilisateur comprime l'élément lui-même vers l'intérieur de la boîte.

5. Elément selon la revendication 1, **caractérisé en ce qu'**il a des incisions (13) d'une forme sensiblement incurvée, placées en correspondance avec les étriers (7).

6. Elément de fermeture temporaire d'une boîte encastrée pour des installations électriques, la boîte étant du type qui a, en correspondance avec ses deux parois latérales (6), un étrier (7) muni d'un trou (8) adapté pour contenir une vis pour fixer la plaque de fermeture définitive d'une forme rectangulaire sur la boîte, l'élément de fermeture temporaire ayant une forme et une dimension telles que ses bords latéraux s'agencent exactement dans les bords latéraux internes de la boîte, un prolongement (1") étant fourni pour être mis en place à l'intérieur de la boîte et placé en chevauchement sur l'étrier correspondant (7), en correspondance avec au moins un des bords latéraux de la boîte,
**caractérisé en ce que**
l'élément de fermeture est réalisé en un matériau de carton qui est suffisamment rigide, bien que facilement pliable ou cassable à la suite d'une poussée ferme exercée sur celui-ci dirigée à partir de l'extérieur vers l'intérieur de la boîte.
